# FASCICULE DE BREVET EUROPEEN

(11) **EP 1 142 753 B1**
(45) Date de publication et mention de la délivrance du brevet: **08.12.2004**
(21) Numéro de dépôt: 01400827.0
(22) Date de dépôt: 30.03.2001
(51) Int. Cl.: B60N 2/48, B60N 2/44

(54) **Appui-tête, notamment pour siège de véhicule automobile**
Kopfstütze, insbesondere für Kraftfahrzeugsitze
Headrest, especially for motor vehicle seats

(30) Priorité: 04.04.2000 FR 0004263
(43) Date de publication de la demande: 10.10.2001
(73) Titulaire: Centre d'Etudes et Recherche pour l'Automobile ( CERA), 51100 Reims (FR)
(72) Inventeur: Bieven, Franck, 75008 Paris (FR)
(74) Mandataire: Keib, Gérard

(56) Documents cités:
- DE-A- 3 039 934
- FR-A- 2 689 825
- GB-A- 2 302 268
- US-A- 5 370 446
- US-A- 5 531 505
- US-A- 5 904 405
- US-A- 6 129 421
- PATENT ABSTRACTS OF JAPAN vol. 006, no. 267 (M-182), 25 décembre 1982 (1982-12-25) & JP 57 158128 A (NISSAN JIDOSHA KK), 29 septembre 1982 (1982-09-29)

## Description

La présente invention concerne un appui-tête de siège, notamment pour véhicule automobile, et plus particulièrement un tel appui-tête comprenant un coussin solidaire d'une armature de montage.

On connaît de tels appuis-tête dans lesquels l'armature est constituée par une pièce tubulaire coudée en forme de U, formant deux branches latérales sensiblement verticales et une branche centrale sensiblement horizontale. Les branches verticales sont agencées pour coulisser dans des douilles solidaires du dossier du siège pour permettre un réglage en hauteur de l'appui-tête. Le coussin est monté sur la branche horizontale de l'armature en forme de U, généralement pivotant pour permettre un réglage de son inclinaison.

L'inconvénient de ce type d'appui-tête réside dans le fait qu'il n'est pas adapté à une position de repos ou de sommeil lorsqu'il est installé sur le siège passager avant ou sur un siège arrière. En effet, aucun moyen n'est prévu pour maintenir la tête du passager.

C'est la raison pour laquelle on a proposé un appui-tête comprenant des ailes mobiles pivotant autour d'un axe transversal sensiblement horizontal situé à la base dudit coussin fixe, depuis une position sensiblement verticale où elles sont dans l'alignement dudit coussin fixe à une position sensiblement horizontale où elles font saillie vers l'avant (cf. par exemple GB-A-2 302 268, correspondant au préambule de la revendication indépendante).

On comprend que lorsqu'elles sont en position horizontales, ces deux saillies viennent encadrer la tête de l'occupant du siège et par conséquent la maintenir latéralement.

Cet agencement présente toutefois des inconvénients.

En premier lieu, l'axe transversal de pivotement traverse la partie basse du coussin ce qui entraîne des difficultés de réalisation.

Par ailleurs, le fait que l'axe transversal de pivotement traverse la partie basse du coussin impose qu'il soit situé relativement haut par rapport au dossier du siège, et que cette hauteur ne soit pas réglable par rapport au coussins.

On connaît du document WO-01/10669 un appui-tête comprenant un coussin solidaire d'une armature et deux ailes mobiles pivotant autour d'un axe transversal sensiblement horizontal, les ailes latérales formant les branches latérales d'une pièce en forme de U dont la branche centrale est agencée pour pivoter autour de l'axe transversal en demeurant parallèle au bord inférieur du coussin fixe. Un tel appui-tête est adapté pour augmenter la visibilité en arrière du conducteur lorsque le siège arrière n'est pas occupé.

La présente invention vise à pallier ces inconvénients.

Plus particulièrement, l'invention vise à fournir des moyens permettant de maintenir, confortablement et en toute sécurité, la tête d'un passager endormi.

Plus particulièrement encore, l'invention vise à fournir des moyens de soutien de la tête du passager qui soient réglables en hauteur par rapport au coussin de l'appui-tête.

Plus particulièrement encore, l'invention vise à fournir de tels moyens qui soient le plus simplement possible réalisables.

A cet effet, l'invention a pour objet un appui-tête de siège, selon la revendication 1.

On observera en premier lieu que la pièce en U et son axe de pivotement sont physiquement dissociés du coussin d'appui-tête. Leur réalisation ne pose donc de problème particulier.

En outre, la hauteur de la pièce en U par rapport au coussin peut être réglable.

En effet, dans un mode de réalisation particulier, ladite pièce en forme de U peut être agencée pour coulisser par rapport à ladite armature.

Il est ainsi possible de régler indépendamment la hauteur du coussin et la hauteur des ailes de maintien.

Plus particulièrement, ladite armature comporte au moins une broche de montage, des crans de réglage en hauteur de ladite pièce en forme de U étant prévus sur ladite branche.

On décrira maintenant, à titre d'exemple non limitatif, un mode de réalisation particulier de l'invention, en référence aux dessins schématiques annexés dans lesquels :
- la figure 1 est une vue en perspective d'un appui-tête selon l'invention en position d'utilisation normale ;
- la figure 2 est également une vue en perspective de cet appui-tête en position de sommeil ;
- la figure 3 est une vue en perspective du mécanisme de montage de la têtière ;
- la figure 4 est une vue en coupe selon la ligne 4-4 de la figure 3.

L'appui-tête représenté aux dessins comporte une armature de montage 1 en forme de U comportant deux branches latérales 2 sensiblement verticales et une branche (non représentée) généralement horizontale, sur laquelle un coussin d'appui 3 est monté.

Une têtière 4 présente une forme générale en U avec deux ailes latérales 5 et une partie centrale 6. La têtière 4 est montée pivotante autour d'un axe horizontal transversal parallèle à la branche centrale de l'armature 1. A cet effet, chaque aile 1 comporte une tige d'armature 7 comportant, à son extrémité opposée à l'extrémité libre de l'aile 5, un axe tubulaire de rotation 8.

La broche 2 comprend des crans 9 de réglage en hauteur de la têtière 4, ces crans 9 coopérant avec une douille de réglage en hauteur 10 munie de tout système convenable permettant un blocage en hauteur de la douille 10 par rapport à la broche 2.

Un axe mâle 11 est soudé à la douille 10 et fait saillie vers l'extérieur pour coopérer avec l'axe tubulaire 8 dans lequel il pénètre. L'axe tubulaire 8 est clipsé sur l'axe mâle 11.

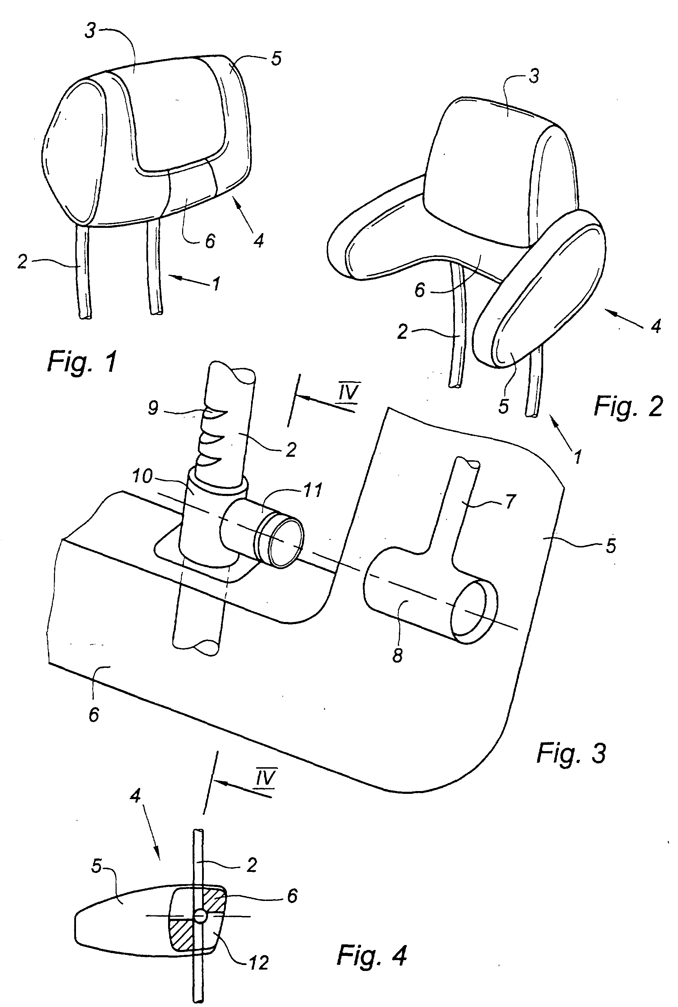

Ainsi, la têtière 4 peut pivoter de sa position où les ailes 5 sont verticales, représentée à la figure 5, à sa position où les ailes 5 font saillie vers l'avant, représentée à la figure 2, par rotation de l'axe tubulaire 8 sur l'axe mâle 11. Dans ce mouvement, la partie centrale 6 de la têtière 4 demeure parallèle au bord inférieur du coussin 3.

De plus, grâce au cran 9 et à la douille de réglage 11, la têtière est réglable en hauteur par rapport au coussin 3.

On voit à la figure 4 que la partie centrale 6 de la têtière 4 comporte deux découpes 12, chacune sur un quart de sa surface pour permettre le passage de la broche 2 lors de la rotation de la têtière.

## Revendications

1. Appui-tête de siège, notamment pour véhicule automobile comprenant un coussin fixe (3) solidaire d'une armature de montage (1), et deux ailes (5) mobiles pivotant autour d'un axe transversal sensiblement horizontal, depuis une position sensiblement verticale où elles sont dans le prolongement dudit coussin fixe (3) à une position sensiblement horizontale où elles font saillie vers l'avant, **caractérisé par le fait que** lesdites ailes (5) forment les branches latérales d'une pièce (4) en forme de U dont la branche centrale (6) est disposée en dessous du bord inférieur du coussin fixe (3), ladite branche (6) étant agencée pour pivoter autour de l'axe transversal en demeurant parallèle audit bord inférieur, ledit axe transversal étant situé en dessous du bord inférieur du coussin fixe (3).

2. Appui-tête selon la revendication 1, dans lequel ladite pièce (4) en forme de U est agencée pour coulisser par rapport à ladite armature (1).

3. Appui-tête selon la revendication 2, dans lequel ladite armature (1) comporte au moins une broche de montage (1), des crans (9) de réglage en hauteur de ladite pièce en forme de U étant prévus sur ladite broche.

## Patentansprüche

1. Kopfstütze für einen Sitz, insbesondere für ein Kraftfahrzeug, mit einem festen, mit einem Montagegestell (1) ein Teil bildenden Kissen (3), und zwei mobilen Flügeln (5), die um eine etwa horizontale Querachse herum verschwenkbar sind aus einer etwa vertikalen Position, in der sie sich in der Verlängerung des besagten festen Kissens (3) befinden, in eine etwa horizontale Position, in der sie nach vorne ragen, **dadurch gekennzeichnet, dass** die besagten Flügel (5) die seitlichen Schenkel eines U-förmigen Teils (4) bilden, dessen mittlerer Schenkel (6) unter dem unteren Rand des festen Kissens (3) angeordnet ist, wobei der besagte Schenkel (6) vorgesehen ist, um die Querachse zu schwenken und dabei parallel zum besagten unteren Rand zu bleiben, wobei sich die besagte Querachse unter dem unteren Rand des festen Kissens (3) befindet.

2. Kopfstütze nach Anspruch 1, bei der das besagte U-förmige Teil (4) so vorgesehen ist, dass es in Bezug auf das besagte Gestell (1) verschiebbar ist.

3. Kopfstütze nach Anspruch 2, bei der das besagte Gestell (1) mindestens einen Montagestift (1) aufweist, wobei an dem besagten Stift Kerben (9) für die Höheneinstellung des besagten U-förmigen Teils vorgesehen sind.

## Claims

1. A seat headrest, in particular for a motor vehicle, comprising a fixed cushion (3) integral with a mounting frame (1), and two movable wings (5) pivoting about a substantially horizontal transverse axis, from a substantially vertical position where they are in line with said fixed cushion (3) to a substantially horizontal position where they project towards the front, **characterised by** the fact that said wings (5) form the lateral branches of a U-shaped component (4) whose central branch (6) is disposed underneath the lower edge of the fixed cushion (3), said branch (6) being arranged to pivot about the transverse axis while remaining parallel to said lower edge, said transverse axis being situated underneath the lower edge of the fixed cushion (3).

2. A headrest according to Claim 1, in which said U-shaped component (4) is arranged to slide with respect to said frame (1).

3. A headrest according to Claim 2, in which said frame (1) comprises at least one mounting spindle (1), notches (9) for heightwise adjustment of said U-shaped component being provided on said spindle.
